# EUROPEAN PATENT APPLICATION

(11) **EP 2 191 710 A1**
(43) Date of publication of application: **02.06.2010**
(21) Application number: 09386029.4
(22) Date of filing: 10.11.2009
(51) Int. Cl.: A01D 46/22

(54) **Rapid harvest device of arboricultural products**

(30) Priority: 28.11.2008 GR 20080100747
(71) Applicant: Koliousis, Christos, 46100 Igoumenitsa (GR)
(72) Inventor: Koliousis, Christos, 46100 Igoumenitsa (GR)
(74) Representative: Panagiotidou, Effimia

(57) **Abstract**

A rapid harvest device of arboricultural products consisting of the main transmission/ carriage tube of the harvested products, (3) adapted to the storage container/suitcase of all the parts of the device (7). The rapid harvest device of arboricultural products consists of the main transmission/ carriage tube (3) of the harvested products, an intake nozzle (1) of the products, a suspension mechanism (2) of the mouth, with a fixing hook (9), a braking system for reducing collision speed (brake) (5) of the product, clamping mechanisms (clamps) (4). The main transmission/ carriage tube (3) of the harvested products can be adjusted on a rotary support mechanism (6), which in turn is secured on the storage container/suitcase (kit) (7) of all the parts of the device. The device can be used to collect crops from fruit-bearing, citrus and many other trees at the production site.

## Description

The invention refers to a device for harvesting crops from fruit-bearing, citrus and many other trees.

The harvesting of crops from trees is so far based solely on manual labour, without the help of a harvesting device. This results in the long-lasting employment of large numbers of workers under difficult working conditions (workers climbing up and down trees with buckets, etc.) causing the increase of the harvesting cost as well.

The present invention comes to solve the above problems of manual work, as it is a device that, on the one hand, minimizes the unnecessary movement of workers when climbing up and down the tree and on the other hand, it leads the collected products directly to the storage container.
It consists of at least one main transmission/ carriage tube which is equipped with an inlet nozzle for the products, a suspension mechanism of the nozzle (strap or /and hook), linking/clamping mechanisms for the tubular sections (clamps) and a braking system for reducing collision speed (brake) of the product into a storage container (kit). The tube can be adjusted using a rotary support mechanism which is mounted on a special storage container/suitcase (kit).

The advantage of this invention is that it minimizes the amount of time of crop harvest, a key factor in reducing the final cost of the total work of product harvest. This is achieved through the continuous and uninterrupted flow of the crops to the storage container (crate) with no unnecessary pauses and tiring movements by the workers (e.g. up and down the trees etc) and, thus, the harvest of products and their transport quickens and is made easier, while the number of employed workers and the labour costs required for the harvest are also reduced. Also, this is a device that has the additional advantage of being constructed from low cost materials, resistant to wear and tear, with easy and inexpensive maintenance. This feature offers a further reduction in the cost of the harvest incurred to the producer (farmer).

The attached Drawing briefly depicts the following four figures:
Figure 1 shows the main transmission/ carriage tube of the harvested products (3), with its equipment.
Figure 2 illustrates the storage container-suitcase (7) with all the parts of the rapid harvest device of arboricultural products (kit).
Figure 3 shows details of the rotary support mechanism (6) of the tube.
Figure 4 shows details of the connection mechanism (clamp) (4).

The invention is described below, using a non-restrictive example, and with reference to the attached drawing and the figures it contains.

The rapid harvest device of arboricultural products consists of the main transmission/ carriage tube (3) of the harvested products which is made of flexible, durable and lightweight material, and with circular cross-sections of different dimensions, depending on the size of the product it will carry. The use of the device is made easier and its performance is maximized when the main transmission/ carriage tube (3) of the harvested products is made of material capable to provide variation in length (bellow). In any case, the length of the tube is the user's choice.

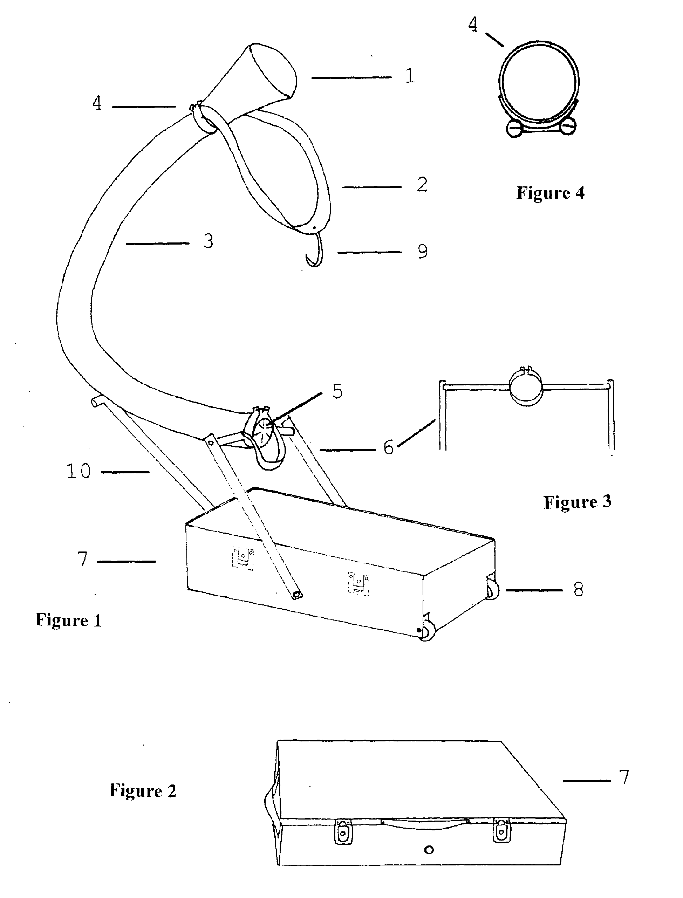

At the one end of the main transmission/ carriage tube (3) of the harvested products, the inlet nozzle (1) of the products is fitted with a clamp (Figure 3, no 4), and it is made from light, durable material so as to satisfy the operational needs of the device. The proposed shape for the inlet nozzle is the through, inverted truncated cone with a large-diameter on the inlet for the easy insertion of the product into the device and a smaller-diameter on the outlet such as to fit perfectly on the main products' transmission / carriage tube.

At the connection point of the inlet nozzle (1) with the main transmission/ carriage (3) tube of the products, the mounting mechanism of the nozzle is placed, consisting of a mounting strap (2) which may have a fixing hook (9) so that the workers can choose to hang the device on their body with a strap (2), or on any other fixed point (e.g. a tree twig) with the hook (9) and so facilitate the work of harvesting.

At the other end of the main transmission/ carriage tube (3) of the harvested products, the braking mechanism for reducing collision speed (brake) (5) is fitted with a clamp (Figure 3, no. 4), which is preferably made from a rubber strap or other soft material, ensuring the physical integrity of the product when it exits the tube (3) and limiting possible damage when falling in the storage container-suitcase (7) from height.

The main transmission/ carriage tube (3) of the harvested products can be adapted on a rotary support mechanism (6) and operate as an integrated system, as follows:
The end of the main transmission/ carriage tube (3) of the harvested products is placed and fixed in the rotary support mechanism (Figure 3, no. 6), which in turn is mounted on specially designed sockets which the storage container-suitcase has (kit) on its outer part (Figures 1 and 2, No. 7), with which the rotary support mechanism (6) constitutes an integral whole.

All the components of the device are dismantled and stored in the storage container (kit) (7), along with the rotary support mechanism (6). This rotary mechanism (6) can be used to firmly support the harvesting tube (3) and its end above the storage container/suitcase (7), while, at the same time, it can rotate and move each time by following the movements of the worker and by adapting to them, so that all the collected products, in their exit from the tube, end up in the storage container/suitcase (7).

The storage container/suitcase (Figure 2, No. 7) (kit) of all the components of the device may have a carrying handle (Figures 1 and 2, No. 10). All parts of the device are stored in the storage container/suitcase (Figure 2, No. 7) (kit) after being dismantled. The container/suitcase is preferably made from durable material, suitable for the intended use, i.e. able to protect the device from adverse weather conditions.

The rotary support mechanism (6) described above, in another application example of the present invention can be substituted by any other means of support of the main transmission/ carriage tube (3) of the harvested products, able to stabilize the tube above the desirable point / container of the collected products.

In the drawing presented here, a tube of one and the same cross section has been used, but tubes of different cross section can be used. Also, the shape of the suitcase is rectangular, but this doesn't prevent the construction of an oblique or other shape container/suitcase.

Also, in the example given here one main transmission/ carriage tube (3) of the harvested products has been used. It is possible to increase the length of the main transmission/ carriage tube (3) of the harvested products, with the "patchwork" of two or more pipes, which are adapted to each other by means of clamps (4), or another mechanical assembly component, so that the device can be used when collecting crops from higher parts of trees.

In the application example of the innovative concept described here, the clamping mechanism (Figure 4, No. 4) has the form of a clamp. Certainly, however, any other mechanical assembly point can be used instead, e.g. friction coupling or rigid coupling at the edges of the main transmission/ carriage tube (3) of the harvested products, and respectively at the mouth (1) and the brake (5) that will be adjusted at its both ends.

The invention can be used to collect crops of fruit-bearing, citrus and many others trees, at the production site.

## Claims

1. A rapid harvest device of arboricultural products which is **characterized in that** it has at least:
i) main transmission/ carriage tube (3) of the harvested products
ii) inlet nozzle (1) of products adapted at the tip of the tube
iii) suspension mechanism (2) of the mouth,
iv) linking/clamping mechanisms (4) at the edges of the main transmission/ carriage tube (3) of the harvested products
v) braking system for reducing collision speed (5) (brake) of the product

2. A rapid harvest device of arboricultural products according to Claim 1, **characterized in that** the ending of the main transmission/ carriage tube (3) of the harvested products can be adjusted either on a rotary support mechanism (6), which in turn is attached and immobilized in specially designed sockets that the storage container/suitcase of all the parts of the device (kit) (7) has and which forms an integral unit with the support mechanism (6) or, alternatively, on any other supporting means, able to stabilize the main transmission/ carriage tube (3) of the harvested products above the desired point / container of the collected products.

3. A rapid harvest device of arboricultural products according to Claim 1 or /and to Claim 2, **characterized in that** it is possible to increase the length of the main transmission/ carriage tube (3) of the harvested products, with the "patchwork" of two or more tubes, which will be adjusted to each other by means of clamps (4) or another mechanical stabilization / assembly element.

4. A rapid harvest device of arboricultural products according to Claims 1 to 3, **characterized in that** instead of the clamp (4), at the edges of the main transmission/ carriage tube (3) of the harvested products, and at the mouth (1) and brake (5) which are fitted at both ends of the tube respectively (3), any other mechanical assembly element can be used which brings stability of assembly.

5. A rapid harvest device of arboricultural products according to Claims 1 to 4, **characterized in that** the suspension mechanism (2) of the mouth, can bear a hook (9) at a certain point.

6. A rapid harvest device of arboricultural products according to Claims 1 to 5, **characterized in that** the storage container/suitcase (kit) (7) can have a permanent or removable carrying handle (10) or/and wheels (8) to facilitate handling.
